# EUROPÄISCHE PATENTSCHRIFT

(11) **EP 0 460 491 B1**
(45) Veröffentlichungstag und Bekanntmachung des Hinweises auf die Patenterteilung: **11.01.1995**
(21) Anmeldenummer: 91108621.3
(22) Anmeldetag: 28.05.1991
(51) Int. Cl.: A01D 34/66

(54) **Arbeitsgerät, insbesonere Mähbalken, mit mehreren Modulen und ein Verfahren zum Montieren eines Arbeitsgerätes**
Work tool, especially a cutter bar, with several modules and a method of assembly of a work tool
Outil de travail, en particulier barre de coupe, avec plusieurs modules et procédé pour le montage d'un outil de travail

(30) Priorität: 01.06.1990 US 531605
(43) Veröffentlichungstag der Anmeldung: 11.12.1991
(73) Patentinhaber: DEERE & COMPANY, Moline, Illinois 61265 (US)
(72) Erfinder: Walters, James C., Ottumwa, Iowa 52501 (US); Richardson, Craig Allen, Ottumwa, Iowa 52501 (US); Verhulst, Michael Joseph, Ottumwa, Iowa 52501 (US)
(74) Vertreter: Feldmann, Bernhard

(56) Entgegenhaltungen:
- EP-A- 0 070 585
- EP-A- 0 135 459
- WO-A-88/03749
- DE-C- 3 127 078
- FR-A- 2 394 239
- FR-A- 2 582 901
- FR-A- 2 630 289
- US-A- 4 468 916
- US-A- 4 720 964

## Beschreibung

Die Erfindung betrifft ein Arbeitsgerät, insbesondere Mähbalken, mit mehreren Modulen, die jeweils einen Gehäuseabschnitt und eine Arbeitseinheit aufweisen, und ein Verfahren zum Montieren eines Arbeitsgerätes.

Arbeitsgeräte der genannten Art finden häufig, aber nicht ausschließlich Anwendung in der Landwirtschaft, z. B. bei Heuwerbungsmaschinen, Kreiseleggen, Mähwerken und da insbesondere bei Scheibenmähwerken. Diese Arbeitsgeräte werden meist in verschiedenen Breiten angeboten, was herkömmlich dazu führt, daß verschiedene Gehäuse für den Antrieb und die Arbeitseinheiten gefertigt werden.

Anderenseits zeigt die US-A-4,468,916 ein aus mehreren Modulen zusammengesetztes Arbeitsgerät für vier Arbeitseinheiten, nämlich Mähscheiben, wobei die Trennstelle der Module durch die Lagerung für den Antrieb einer Arbeitseinheit verläuft. Wenn diese Lösung auch die Herstellung unterschiedlich breiter Arbeitsgeräte mit den gleichen Komponenten erlaubt, so ist die durch die Lagersitze verlaufende Trennstelle aus fertigungstechnischer Sicht sehr ungünstig. Außerdem kann mit derartigen Modulen stets nur eine gerade Zahl an Arbeitseinheiten aufgenommen werden, da anderenfalls die Drehrichtungen der jeweiligen Arbeitseinheiten nicht optimal verlaufen. Schließlich müssen die Gehäuse der endseitigen Module anders ausgeführt werden als die der dazwischenliegenden.

Die DE-C-31 27 078 zeigt wiederum ein einteiliges Gehäuse mit mehreren Mähscheiben, die jedoch in dem Gehäuse exzentrisch gelagert sind und mit jeweils einem von zwei den Antrieb einleitenden und gegensinnig umlaufenden Umlenkrädern in Eingriff gebracht werden können. Auf diese Weise läßt sich die Drehrichtung der Arbeitseinheiten umkehren, so daß die Abgabe von gemähtem Gras an unterschiedlichen Stellen erfolgen kann. Nachteilig hierbei ist, daß verschiedene Arbeitsgerätebreiten unterschiedlich breite Gehäuse erfordern.

Schließlich zeigt die US-A-4,720,964 ein ebenfalls als Scheibenmäher ausgebildetes Arbeitsgerät in Modulbauweise, wobei die Trennebene der Module seitlich einer Lagerstelle der Arbeitseinheiten verläuft. Bei dieser Ausführung erfolgt der Antrieb der Arbeitseinheiten jedoch über mehrere parallel geschaltete Winkelgetriebe, die kostenintensiv herzustellen sind und zu einer großen Bauhöhe des Arbeitsgeräts führen.

Die der Erfindung zugrunde liegende Aufgabe wird darin gesehen, ein Arbeitsgerät zu schaffen, das bei geringem Fertigungsaufwand in verschiedenen Breiten herstellbar ist, einen geringen Raumbedarf hat und dessen Arbeitseinheiten zumindest weitgehend optimal betrieben werden können. Zudem sollen eine vorteilhafte Verwendung und ein rationelles Herstellungsverfahren gefunden werden.

Diese Aufgabe ist erfindungsgemäß durch die Merkmale der Patentansprüche 1, 14 und 15 gelöst worden, wobei in den weiteren Patentansprüchen Merkmale aufgeführt sind, die die Lösung in vorteilhafter Weise weiterentwickeln.

Auf diese Weise ergibt sich infolge der Stirnradanordnung ein flache Bauform, die durch die Modulbauweise in verschiedenen Breiten ausgeführt werden kann, wobei die Trennebene nicht durch die Lagersitze verläuft. Die Verwendung anschlußseitig stets gleicher Gehäuseabschnitte führt zu einer hohen Stückzahl und somit zu geringen Stückkosten. Die veränderbare Lagerung der Zahnräder der Arbeitseinheiten läßt eine Anpassung der Drehrichtung der Arbeitseinheiten an die äußeren Umstände zu. Es reicht aus, wenn die Gehäuseabschnitte an den Anschlußseiten gleich ausgebildet sind, weil sie dort bearbeitet werden müssen. Von allergrößtem Vorteil ist es jedoch, wenn die Gehäuseabschnitte vollkommen identisch sind.

Wenn auch die Gehäuseabschnitte gleich ausgebildet sind, so sind diese auch am seitlichen Ende des Arbeitsgeräts kostengünstig verwendbar, indem nur eines der Umkehrräder benutzt wird. Hingegen dient von den dazwischenliegenden Umkehrrädern eines stets als Antrieb und als Durchtrieb, während das andere stets nur als Durchtrieb dient.

Die Anordnung der Umkehrräder und Zahnräder mit ihren Mittelpunkten auf jeweils einer Linie ist aus fertigungstechnischer Sicht bzgl. der Bearbeitung auf Fertigungsstraßen optimal.

Die Anordnung der Drehachse von einer der beiden endseitigen Arbeitseinheiten geringfügig hinter der Linie der Drehachsen der übrigen Arbeitseinheiten verhindert eine Kollision auf den Arbeitseinheiten befindlicher und radial überstehender Arbeitselemente bei gleicher Drehrichtung.

Da bedingt durch die Durchlässe in den seitlichen Endflächen der Gehäuseabschnitte eine Verbindung des Innenraums aller Gehäuseabschnitte gegeben ist, kann dieser Innenraum durch seine flüssigkeitsdichte Ausbildung, die von den Schrauben-Mutter-Verbindungen gesichert wird, als Schmiermittelbehälter benutzt werden.

Eine die Gehäuseabschnitte bzw. Module unten bedeckende Gleitplatte dient zu deren Schutz beim Anstoß an Hindernissen und der Montageerleichterung, da die Module hiermit zusammengehalten werden, bis sie an einem Versteifungsbalken oder an irgendeinem Rahmen befestigt sind.

Ein Schaden an den Arbeitseinheiten wird auch dann zumindest weitgehend vermieden, wenn sich der Gehäuseabschnitt in Fahrtrichtung über die Arbeitseinheit hinaus bis zum Anfang der Arbeitselemente erstreckt und somit einen Schutz bietet.

Die Gleitplatte wird sicher gehalten, und ihre Vorderkante wird beim Auftreffen auf ein Hindernis nicht nach unten abgebogen, wenn sie geschützt hinter einem Versatz untergebracht ist.

Eine Erhöhung der Stabilität der Verbindung zwischen den Gehäuseabschnitten wird erreicht, indem man diese an einen Versteifungsbalken anschraubt, wobei eine sichere Anlage durch die geeignete Ausbildung rückwärtiger Wände der Gehäuseabschnitte und des Profils des Versteifungsbalkens gewährleistet wird.

Zum Schutz der möglicherweise ansonsten freiliegenden Seitenflächen der endseitigen Gehäuseabschnitte und als einfache Möglichkeit, den Austritt von Schmiermittel aus den Gehäuseabschnitten zu vermeiden, sind Abschlußdeckel vorgesehen. Eine Abdichtung könnte anderenfalls auch mittels Stopfen erfolgen.

Die wahlweise Verbindung des Zahnrads einer Arbeitseinheit mit dem Umlenkrad der richtigen Drehrichtung läßt sich am einfachsten mit einer exzentrischen Anordnung des Lagergehäuses in einer Öffnung des Gehäuseabschnitts erreichen.

Sehr hohe Vorteile ergeben sich infolge der Verwendung des erfindungsgemäßen Arbeitsgeräts bei einem Scheibenmäher, bei dem der Mähbalken als ein solches Arbeitsgerät ausgebildet ist. Ein derartiger Mähbalken kann flach ausgebildet, unterschiedlich viele Mähscheiben enthalten und die Mähscheiben in der richtigen Drehrichtung antreiben.

Das angegebene Verfahren zum Zusammenbauen des Arbeitsgeräts bedient sich vorteilhafterweise der Gleitplatte als Haltevorrichtung für die Module.

In der Zeichnung ist ein nachfolgend näher beschriebenes Ausführungsbeispiel der Erfindung dargestellt. Es zeigt:
- Fig. 1: ein Arbeitsgerät in Draufsicht,
- Fig. 2: einen Gehäuseabschnitt des Arbeitsgeräts in einer Seitenansicht von links,
- Fig. 3: einen Gehäuseabschnitt des Arbeitsgeräts in einer Seitenansicht von rechts,
- Fig. 4: eine Gleitplatte in perspektivischer Ansicht,
- Fig. 5: einen Vertikalschnitt durch das Arbeitsgerät entlang der Linie 5-5 in Figur 1 und in Blickrichtung der dazugehörigen Pfeile,
- Fig. 6: einen Gehäuseabschnitt in Draufsicht,
- Fig. 7: einen Vertikalschnitt durch den Gehäuseabschnitt entlang der Linie 7-7 in Figur 6 und in Blickrichtung der dazugehörigen Pfeile und
- Fig. 8: eine Draufsicht auf einen Bereich des Arbeitsgeräts zur Verdeutlichung der Stellung von Lagern in den Gehäuseabschnitten.

Zum Beginn der Beschreibung wird darauf hingewiesen, daß die Begriffe "rechts", "links", "vorwärts", "vorne", "rückwärts", "rückwärtig" und dergleichen aus der Sicht eines Betrachters gewählt sind, der hinter dem zu beschreibenden Arbeitsgerät steht und in die normale Vorwärtsfahrtrichtung blickt.

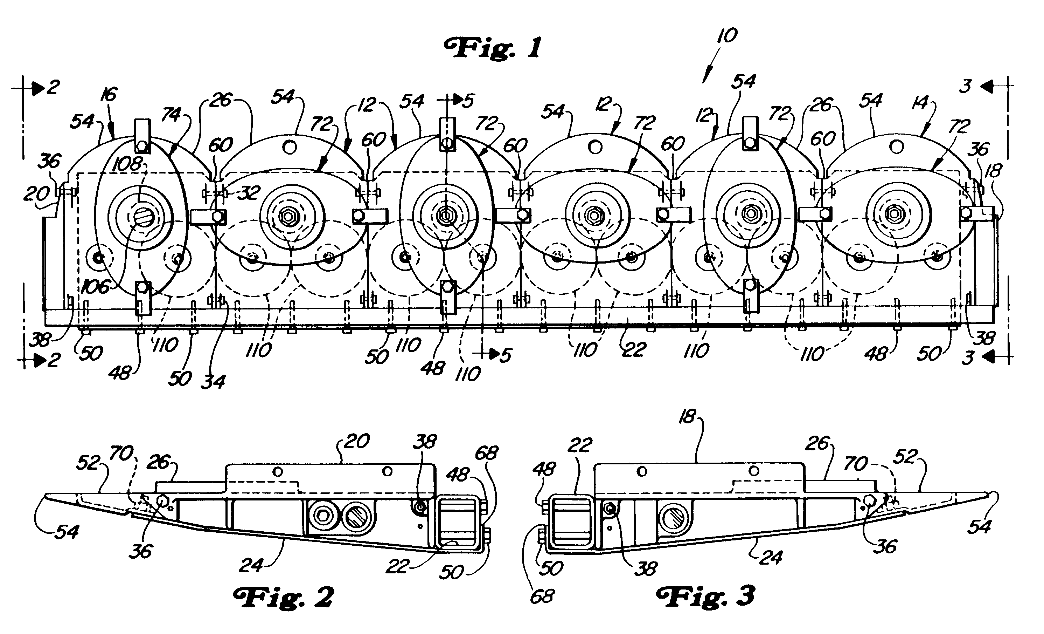

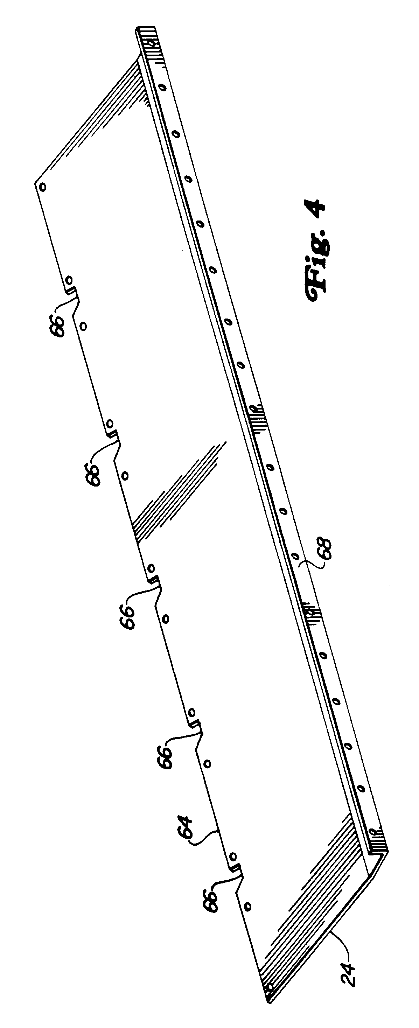

In den Figuren 1 - 4 ist ein Arbeitsgerät 10 gezeigt, das einen Scheibenmäher darstellt. Es könnte sich ebenso um ein anderes Mähwerk mit drehenden Arbeitseinheiten, jedenfalls also um einen Mähbalken, einen Antriebsbalken für eine Kreiselegge oder dergleichen handeln. Dieses Arbeitsgerät 10 ist aus identischen dazwischen angeordneten Modulen 12, einem am rechten Ende angeordneten Modul 14, einem Modul 16 am linken Ende, einem rechten Abschlußdeckel 18, einem linken Abschlußdeckel 20, einem Versteifungsbalken 22 und einer Gleitplatte 24 zusammengesetzt. Der Versteifungsbalken 22 weist einen rechteckförmigen Querschnitt auf und erstreckt sich längs hinter den Modulen 12 - 16 und ist an deren Rückseite angeschraubt, und die Gleitplatte 24 erstreckt sich ebenfalls unterhalb der Module 12 - 16 und ist mit diesen verbunden.

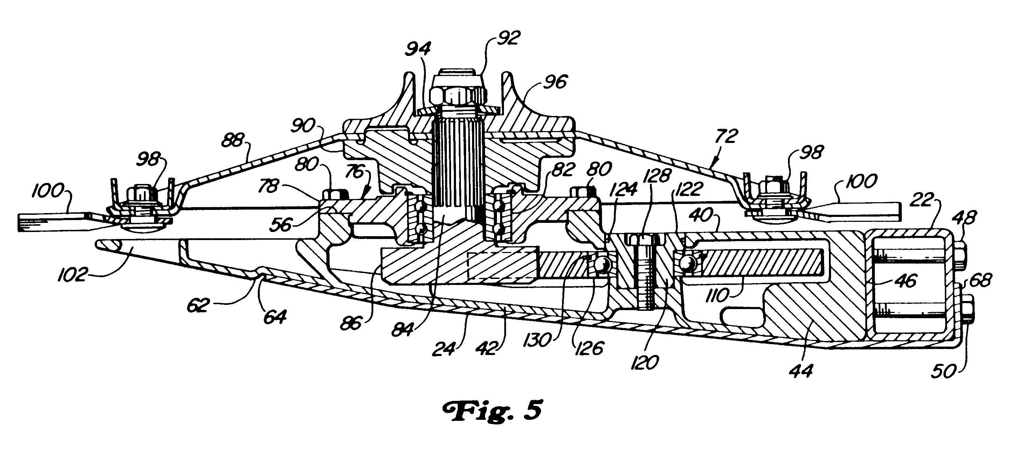

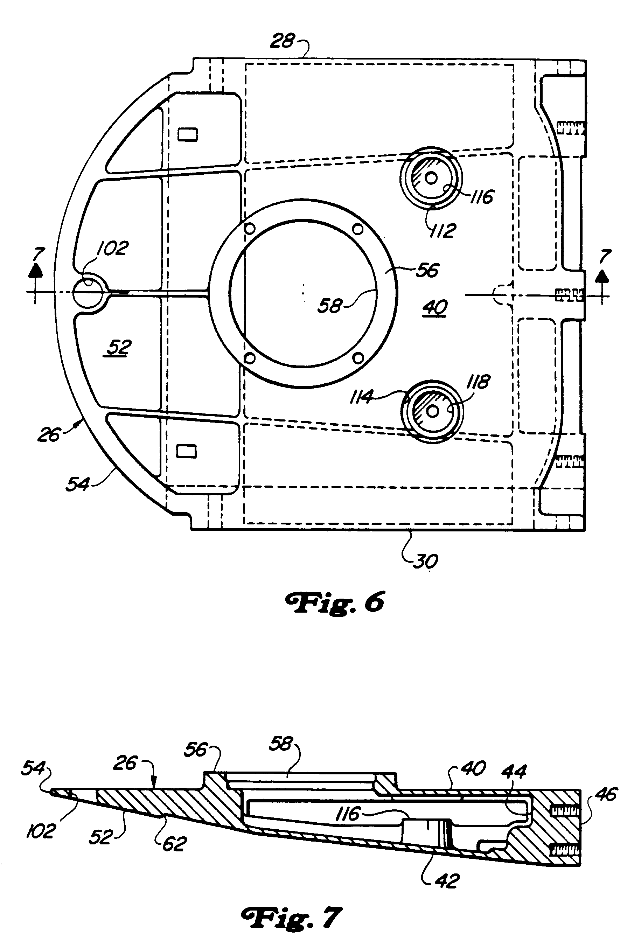

Aus den Figuren 5 - 8 ist ersichtlich, daß jedes Modul 12 - 16 einen gegossenen Gehäuseabschnitt 26 enthält, der rechte und linke, sich von vorne nach hinten erstreckende, in vertikaler Richtung ebene Endflächen 28 bzw. 30 aufweist. Die Gehäuseabschnitte 26 sind endseitig mittels einer vorderen und einer rückwärtigen Schrauben-Mutter-Verbindung 32 und 34 aneinander geflanscht. Dagegen sind der rechte und der linke Abschlußdeckel 18 und 20 jeweils an die rechte bzw. linke Endfläche 28 bzw. 30 der Module 14, 16 am rechten oder linken Ende mittels vorderer bzw. rückwärtiger Schrauben 36 bzw. 38 angeschraubt. Ein brauchbares Dichtungsmittel oder eine Dichtung können an entsprechenden Stellen der Anlage an den Gehäuseabschnitten 26 und den Abschlußdeckeln 18, 20 vorgesehen werden. Jeder Gehäuseabschnitt 26 weist im vertikalen Querschnitt eine Keilform auf und - wie dies aus Figur 5 hervorgeht - hat eine im wesentlichen horizontale Decke 40 und einen Boden 42, die von einer aufgehenden rückwärtigen Wand 44 nach vorne konvergierend verlaufen. Die rückwärtige Wand 44 hat eine ebene, aufrechte, rückwärtige Fläche 46, und der Versteifungsbalken 22 ist gegen diese Fläche 46 an jedem Gehäuseabschnitt 26 mittels einer oberen, mittig angeordneten Schraube 48 und dreier unterer Schrauben 50 geschraubt. Wie dies am besten aus den Figuren 1 - 3 und 6 zu entnehmen ist, kommen die Decke 40 und der Boden 42 zusammen, um einen keilförmigen Schutz 52 für Scheiben 80 zu bilden, dessen vorderer Endbereich 54 im wesentlichen in einem Kreisbogen um eine vertikale Achse einer angehobenen, ringförmigen Montagefläche 56 eines Lagergehäuses ausläuft, das eine Öffnung 58 zum Montieren einer Arbeitseinheit 72, 74 in dem vorderen mittigen Bereich der Decke 40 des Gehäuseabschnitts 26 umfaßt. Die Schutze 52 der zusammengebauten Gehäuseabschnitte 26 bilden daher eine gezahnte, gewellte, vordere Abschlußlinie des Arbeitsgeräts 10. Dabei ist festzustellen, daß die vorderen Endbereiche 54 nebeneinanderliegender Gehäuseabschnitte 26 derart voneinander getrennt sind, daß sich eine im wesentlichen rechtwinklige, nach vorne öffnende Bucht 60 oder Ausschnitt direkt vor den zusammenfallenden Endflächen 28, 30 ergibt. Es ist ferner ersichtlich, daß der Teil des Schutzes 52 jedes Gehäuseabschnitts 26, der den vorderen Endbereich 54 enthält, eine Bodenfläche mit einem Versatz 62 nach unten gegenüber der verbleibenden Bodenfläche des Gehäuseabschnitts 26 aufweist.

Die Gleitplatte 24 bedeckt alles außer dem nach unten vorspringenden Versatz 62 der Bodenfläche, wobei die vordere Kante 64 der Gleitplatte 24 gerade verläuft, wenn man von Nuten 66 absieht, die sich im Bereich der Buchten 60 befinden. Die Gleitplatte 24 ist mit einem sich vertikal erstreckenden rückwärtigen Flansch 68 versehen, der an der rückwärtigen Wand des Versteifungsbalkens 22 angelegt ist. Ein Paar von mit seitlichem Abstand zueinander angeordneten Schrauben-Mutter-Verbindungen 70 macht die Gleitplatte 24 an jedem der Schutze 52 fest, während die drei Schrauben 50 die Verbindung des Flansches 66 mit dem Versteifungsbalken 22 sicherstellen. Es ist somit ersichtlich, daß der Versatz 62 in dem Schutz 52 dazu dient, die Vorderkante der Gleitplatte 24 vor Zusammenstößen mit Hindernissen während des Betriebs zu schützen.

Die dazwischenliegenden Module 12 und das Modul 14 am rechten Ende enthalten identische Arbeitseinheiten 72, während das Modul 16 am linken Ende eine Arbeitseinheit 74 trägt, die sich von den vorgenannten Arbeitseinheiten 72 wie nachfolgend erläutert geringfügig unterscheidet.

Im einzelnen ist gemäß den Figuren 1 und 5 jede Arbeitseinheit 72 mit einem Lagergehäuse 76 versehen, das einen ringförmigen Montageflansch 78 enthält, das selbst wieder über Schrauben 80 lösbar in dichtendem Eingriff mit der Montagefläche 56 steht und einen Lagerzusammenbau 82 enthält, der darin aus nachstehend erläutertem Grund zu dem Montageflansch 78 exzentrisch aufgenommen ist. In dem Lagerzusammenbau 82 ist eine Welle 84 für den Antrieb der Arbeitseinheiten 72 aufgenommen, die an ihrem Fußende einstückig mit einem Zahnrad 86 versehen ist. Darüber hinaus enthält jede Arbeitseinheit 72 eine Scheibe 88, die in der Draufsicht oval und nach oben konvex ausgebildet ist. Die Scheibe 88 hat eine mittige Nabe 90, die mit der Welle 84 in Zahneingriff steht und mittels einer Mutter 92 gehalten wird, die auf das obere Ende der Welle 84 aufgeschraubt ist und über eine Scheibenfeder 94 einen Klemmteil 96 gegen die Scheibe 88 drückt. An den sich diametral gegenüberliegenden Enden über die größere Länge jeder der Scheiben 88 ist mittels einer Schrauben-Mutter-Verbindung 98 ein Paar Arbeitselemente 100 angebracht, die so angeordnet sind, daß sie eine Fläche überstreichen, die unmittelbar gegenüber dem im wesentlichen bogenförmigen Endbereich 54 des Schutzes 52 des Gehäuseabschnitts 26 verläuft, in dem die Arbeitseinheit 72 aufgenommen ist. Bei den Arbeitselementen 100 kann es sich um Mähmesser, Schlegel, Bodenbearbeitungszinken, Heuwerbungszinken und dergleichen handeln. Es ist eine sich in vertikaler Richtung öffnende Öffnung 102 in dem Schutz 52 so vorgesehen, daß sie mit jeweils einer der Schrauben-Mutter-Verbindungen 98 in Fluchtung gebracht werden und ein Werkzeug aufnehmen kann, mittels dessen die Demontage der Arbeitselemente 100 bewerkstelligt werden kann, wozu es nicht erforderlich ist, daß die Scheiben 88 von der Welle 84 entfernt werden.

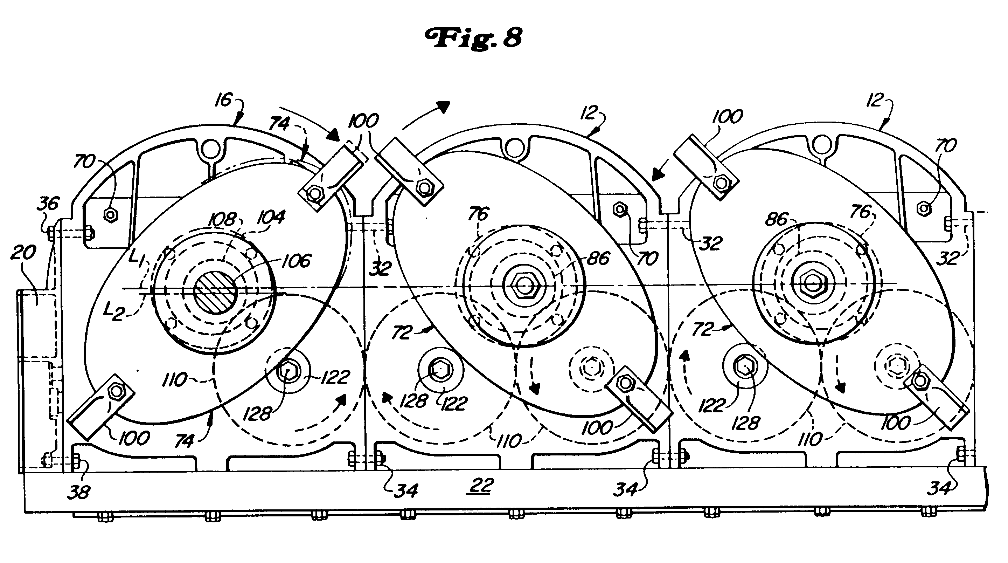

Die linke Arbeitseinheit 74 (sh. Fig. 8) unterscheidet sich von den dazwischenliegenden Arbeitseinheiten 72 dadurch, daß sie ein Lagergehäuse 104 enthält, das einen größeren, nicht gezeigten Lagerzusammenbau aufnimmt und eine Welle 106 zum Antrieb der Arbeitseinheit 74 trägt. Diese Welle 106 dient der Einleitung des Antriebs in das Arbeitsgerät 10 und hat ein Zahnrad 108, das dem Zahnrad 86 entspricht und mit ihrem Fußende einstückig ausgebildet ist. Des weiteren ist - wie nachfolgend noch ausgeführt ist - dieser Lagerzusammenbau in einer anderen exzentrischen Stellung mit Bezug zu einem ringförmigen Aufnahmeflansch des Lagergehäuses 104 gehalten, als die exzentrische Anordnung des Lagergehäuses 76 in bezug auf deren Montageflansch 78.

Für die Übertragung des Antriebsmoments von dem Zahnrad 108 auf die Zahnräder 86 ist eine Vielzahl hintereinander geschalteter Umlenkräder 110 vorgesehen. Jeder der Gehäuseabschnitte 26 enthält rechte und linke, in Querrichtung zueinander einen Abstand aufweisende ringförmige Öffnungen 112 und 114, die sich in der Decke 40 rückwärtig und mit gleichem Abstand zu der Öffnung 58 für die Arbeitseinheiten 72 befinden. An die Innenfläche des Bodens 42 sind in axialer Ausrichtung zu den Öffnungen 112 und 114 zylindrische, sich nach oben erstreckende und öffnende Aufnehmer 116, 118 angeformt. In jedem der Aufnehmer 116 und 118 ist ein Fußbereich einer Welle 120 für die Umlenkräder 110 aufgenommen, die auch ein vergrößertes Kopfende 122 besitzt. Dieses Kopfende 122 ist stramm und dicht in einer der zugehörigen Öffnungen 112, 114 aufgenommen und mit einer umfangsmäßigen Nut versehen, in die eine als O-Ring ausgebildete Dichtung 124 eingesetzt ist, um einen Flüssigkeitsaustritt an dem Kopfende 122 vorbei zu verhindern. Auf allen Wellen 120 mit Ausnahme derer, die jeweils in dem rechten Aufnehmer 116 des Gehäuseabschnitts 26 des am rechten Ende gelegenen Moduls 14 und in dem linken Aufnehmer 118 des Gehäuseabschnitts 26 des am linken Ende gelegenen Moduls 16 fehlen, sind jeweils Lager 126 vorgesehen. Diese Lager 126 sind gehalten zwischen dem Kopfende 122 der jeweils zugeordneten Welle 120 und der Oberseite des dazugehörigen Aufnehmers 116, 118. Hierzu durchdringt eine Schraube 128 axial die Welle 120 und ist in eine Bohrung in dem Boden 42 eingeschraubt. Jedes der Lager 126 ist mit dem Mittenbereich eines betreffenden Umlenkrads 110 mittels eines Sicherungsrings 130 verbunden.

Wie am besten aus Figur 1 zu erkennen ist, sind die Lagergehäuse 104 der verschiedenen Module 12, 14, 16 derart angeordnet, daß sie die Zahnräder 86 jeweils mit denjenigen Umlenkrädern 110 in Eingriff bringen, die für eine entgegengesetzte Drehrichtung benachbarter Arbeitseinheiten 72 sorgen. Diese Drehbewegungsregelung wird grundsätzlich angestrebt, wenn eine gerade Anzahl von Arbeitseinheiten 72 benutzt wird. Es ist aus der Zeichnung ferner zu entnehmen, daß die Scheiben 88 benachbarter Arbeitseinheiten 72 zueinander um jeweils 90° verdreht aufgesetzt sind, wobei sich die Arbeitselemente 100 benachbarter Scheiben 88 nicht berühren können.

Es wird nun auf Figur 8 verwiesen, in der eine Anordnung der Arbeitseinheit 74 des Moduls 16 am linken Ende und zweier daran anschließender zusammenwirkender Module 12 gezeigt ist, und zwar so, wie sie sich ergibt, wenn eine ungerade Anzahl von Modulen 12, 14, 16 genommen wird, um das Arbeitsgerät 10 zu bilden. Insbesondere ist zu erkennen, daß die Lagergehäuse 104 jedes dazwischenliegenden Moduls 12 ausgehend von ihrer in Figur 1 gezeigten Stellung um 180° gedreht sind, so daß jedes Zahnrad 86 mit einem anderen Umlenkrad 110 des in dem betreffenden Modul 12, 14, 16 untergebrachten Paars Umlenkräder 110 kämmt, so daß die jeweiligen Zahnräder 86 gegensinnig umlaufen. Demzufolge drehen die jeweiligen Wellen 84, 106 der Arbeitseinheiten 72, 74 des Moduls 16 am linken Ende und des darauffolgenden Moduls 12 in derselben Richtung, wie es gewöhnlich gewünscht ist, wenn eine ungerade Anzahl von Modulen 12, 14, 16 vorkommt. Wenn die Ausrichtung bzw. Anordnung der Exzentrizität der Lagergehäuse 104 in bezug auf die Lage der für ihre Befestigung eingesetzten Schrauben die gleiche wäre wie die der Lagergehäuse 76, würden die Drehachsen der Wellen 106 auf einer Linie L1 liegen und die Spitze von einem der Arbeitselemente 100 der Arbeitseinheit 74 würde knapp an dem Arbeitselement 100 der benachbarten Arbeitseinheit 72 vorbeistreifen, wie dies in unterbrochenen Linien gezeigt ist. In dem Fall, daß das eine oder andere dieser sich knapp aneinander vorbei bewegenden Arbeitselemente 100 in eine Stellung ausweichen würde, die sich von der gezeigten unterscheidet, könnten die Arbeitselemente 100 aneinander anschlagen. Um zu vermeiden, daß eine derartige Kollision entsteht, ist die Exzentrizität der Lagergehäuse 104 derart ausgebildet, daß sich die Welle 106 rückwärtig der Mittelpunktslinie L1 erstreckt. Diese vorteilhafte Maßnahme sorgt dafür, daß die Arbeitselemente 100 der Arbeitseinheit 74 einen Weg überstreichen, wie dies mit durchgezogenen Linien gezeigt ist, was zu einer Vergrößerung des Abstands zwischen sich nahe aneinander vorbei bewegender Arbeitselemente 100 benachbarter Arbeitseinheiten 72, 74 führt. Dies ist am besten zu erkennen, wenn man die Stellung des Arbeitselements 100 der Arbeitseinheit 74 gemäß der durchgezogenen und der unterbrochenen Linien in Figur 8 miteinander vergleicht.

Die Gleitplatte 24 hat auch eine Bestimmung während des Herstellungsverfahrens, der darin liegt, daß sie als eine Haltevorrichtung benutzt wird, mit der teilweise oder ganz montierte Module 12, 14, 16 gehalten werden, während sie untereinander verbunden werden, um ein Arbeitsgerät 10, z. B. den gezeigten Mähbalken, zu bilden. Insbesondere ist in dem Zusammenbau jedes Arbeitsgeräts 10 in jedem Gehäuseabschnitt 26, der einen Teil des dazwischenliegenden Moduls 12 bildet, ein Paar Umlenkräder 110 montiert, während jeweils nur ein Umlenkrad 110 in den Gehäuseabschnitten 26 enthalten ist, die einen Teil des Moduls 14, 16 am rechten bzw. linken Ende bilden. Die Gleitplatte 24 ist normalerweise auf einer Werkbank oder einem Arbeitstisch gehalten, und die Gehäuseabschnitte 26 sind in einer Reihe entlang der Gleitplatte 24 angeordnet, die eine dem herzustellenden Arbeitsgerät 10 entsprechende Länge aufweist. Dichtungsmittel als Dichtungen oder geformte Dichtungen sind an den betreffenden Stellen der Endflächen 28, 30 der Gehäuseabschnitte 26 vorgesehen. Die Gehäuseabschnitte 26 werden dann jeweils unter Zuhilfenahme der vorderen und rückwärtigen Schrauben-Mutter-Verbindungen 32, 34 miteinander verbunden. Jeder der Gehäuseabschnitte 26 der dazwischenliegenden Module 12 wird daraufhin lose an die Gleitplatte 24 angeschlossen, indem die Schrauben des Paars der Schrauben-Mutter-Verbindungen 70 in die Vorderseite der Gleitplatte 24 und den Schutz 52 des Gehäuseabschnitts 26 gesteckt und lose mit einer Mutter gesichert werden. Anschließend werden die Arbeitseinheiten 72 jeweils auf die Gehäuseabschnitte 26 montiert - mit Ausnahme des am weitesten links gelegenen Gehäuseabschnitts 26, auf den die Arbeitseinheit 74 montiert wird. Schließlich wird dieses teilweise montierte Arbeitsgerät 10 an einer mittigen Stelle zwischen den Enden an ein Hubwerkzeug angeschlossen und zu seinem Bestimmungsort an einem Rahmen z. B. eines Mähschlagzetters gebracht, der auch den Versteifungsbalken 22 enthält. Der Versteifungsbalken 22 wird dann an jeden der Gehäuseabschnitte 26 mittels der oberen und der unteren Schrauben 48 und 50 angeschlossen, wobei letztere auch dazu dienen, den aufgehenden Flansch 68 der Gleitplatte 24 an der Rückseite des Versteifungsbalkens 22 festzulegen.

Zusätzlich zu seiner Funktion als Montagehilfe für die Komponenten des Arbeitsgeräts 10 dient die Gleitplatte 24 auch als Unterbau für verbleibende Komponenten des Arbeitsgeräts 10, wenn dieses für Wartungs- oder Reparaturzwecke zur Demontage von Gehäuseabschnitten 26 teilweise zerlegt wird.

Während des Betriebs dient die Gleitplatte 24 als Verschleißteil, das die Gehäuseabschnitte 26 gegen Verschleiß und Beschädigungen, die aufgrund der Berührung mit dem Boden und/oder Hindernissen entstehen können, schützt.

## Patentansprüche

1. Arbeitsgerät (10), insbesondere Mähbalken, mit mehreren Modulen (12, 14, 16), die jeweils einen Gehäuseabschnitt (26) und eine Arbeitseinheit (72, 74) aufweisen, wobei
a) die Gehäuseabschnitte (26) jeweils
aa) anschlußseitig gleich ausgebildet sind,
bb) an seitlichen Endflächen (28, 30) miteinander lösbar verbindbar sind,
cc) im wesentlichen mittig zwischen den Endflächen (28, 30) eine Öffnung (58) aufweisen,
dd) wahlweise ein oder zwei Umlenkräder (110) drehbar lagern und
ee) im Bereich der Endflächen (28, 30) Durchlässe aufweisen
b) die Arbeitseinheiten (72, 74) jeweils
ff) eine Welle (84, 106) aufweisen, an deren Fußende ein Zahnrad (86, 108) drehfest vorgesehen ist,
gg) über das Zahnrad (86, 108) wahlweise mit einem der Umlenkräder (110) in Eingriff bringbar sind und
hh) antreibbar in der Öffnung (58) aufgenommen sind und
c) die Umlenkräder (110)
ii) als Teil eines Stirnradgetriebes ausgeführt sind,
jj) in Reihe angeordnet und angetrieben sind und
kk) durch die Durchlässe miteinander in Eingriff stehen.

2. Arbeitsgerät nach Anspruch 1, bei dem an den seitlichen Enden des Arbeitsgeräts vorgesehene Module (14, 16) ein Umlenkrad (110) und dazwischen angeordnete Module (12) zwei Umlenkräder (110) drehbar aufnehmen.

3. Arbeitsgerät nach Anspruch 1 oder 2, bei dem die Drehachsen der Umlenkräder (110) auf einer Linie und und die Drehachsen der Zahnräder (86) der dazwischenliegenden Module (12) und eines an einem Ende liegenden Moduls (14 oder 16) auf einer dazu parallel verlaufenden Linie (L1) liegen.

4. Arbeitsgerät nach Anspruch 3, bei dem eine ungerade Anzahl an Arbeitseinheiten (72, 74) vorgesehen ist, wobei sich die Drehachse einer am Ende des Arbeitsgeräts (10) gelegenen Arbeitseinheit (72, 74) zwischen den beiden Linien befindet.

5. Arbeitsgerät nach einem oder mehreren der vorherigen Ansprüche, wobei die Endflächen (28, 30) im wesentlichen eben, in Längsrichtung und vertikal mit einem seitlichen Abstand zueinander verlaufen.

6. Arbeitsgerät nach einem oder mehreren der vorherigen Ansprüche, bei dem die Gehäuseabschnitte (26) zur Bildung eines Gesamtgehäuses flüssigkeitsdicht miteinander über Schrauben-Mutter-Verbindungen (32, 34) verbunden sind.

7. Arbeitsgerät nach einem oder mehreren der vorherigen Ansprüche, bei dem sich unterhalb der Module (12, 14, 16) eine mit diesen verbindbare Gleitplatte (24) erstreckt.

8. Arbeitsgerät nach einem oder mehreren der vorherigen Ansprüche, bei dem die Gehäuseabschnitte (26) einen aus ihrem vorderen Endbereich (54) gebildeten Schutz (52) vor Hindernissen oder dergl. enthalten.

9. Arbeitsgerät nach Anspruch 8, bei dem der vordere Endbereich (54) einen Versatz (62) aufweist, an den die Gleitplatte (24) zur Anlage bringbar ist.

10. Arbeitsgerät nach einem oder mehreren der vorherigen Ansprüche, bei dem die Gehäuseabschnitte (26) und gegebenenfalls die Gleitplatte (24) an einen Versteifungsbalken (22) anschließbar sind.

11. Arbeitsgerät nach Anspruch 10, bei dem der Versteifungsbalken (22) einen rechteckförmigen Querschnitt und die Gehäuseabschnitte (26) rückwärtige, ebene und aufrechte Wände (44) aufweisen, die mittels Schrauben (48, 50) an den Versteifungsbalken (22) anschließbar sind.

12. Arbeitsgerät nach einem oder mehreren der vorherigen Ansprüche, bei dem an die endseitigen Gehäuseabschnitte (26) rechte bzw. linke Abschlußdeckel (18, 20) angeflanscht sind.

13. Arbeitsgerät nach einem oder mehreren der vorherigen Ansprüche, bei dem die Wellen (84, 106) mit Lagerzusammenbauten (82) exzentrisch in Lagergehäusen (76) gelagert sind, die drehfest in den Öffnungen (58) aufgenommen sind.

14. Arbeitsgerät nach einem oder mehreren der vorherigen Ansprüche, bei dem die Gehäuseabschnitte (26) identisch ausgebildet sind.

15. Scheibenmäher mit einem als Mähbalken ausgebildeten Arbeitsgerät gemäß einem oder mehreren der vorherigen Ansprüche.

16. Verfahren zum Montieren des Arbeitsgerätes (10) nach einem der Ansprüche 1-14 mit mehreren Modulen (12, 14, 16) und mit einer Gleitplatte (24), die gemeinsam an einen Versteifungsbalken (22) angebracht werden, gekennzeichnet durch folgende Verfahrensschritte:
a) die Module (12, 14, 16) werden untereinander mittels Schrauben-Mutter-Verbindungen (36, 38) lose verbunden;
b) die Module (12, 14, 16) werden mit der Gleitplatte (24) mittels Schrauben-Mutter-Verbindungen (70) lose verbunden;
c) die aus Modulen (12, 14, 16) und Gleitplatte (24) bestehende Einheit wird an dem Versteifungsbalken (22) positioniert;
d) die Module (12, 14, 16) und die Gleitplatte (24) werden vorzugsweise mittels Schrauben (48, 50) an dem Versteifungsbalken (22) und untereinander mittels Schrauben-Mutter-Verbindungen (32, 34, 70) festgelegt.

## Claims

1. Implement (10), in particular cutter bar, with several modules (12, 14, 16) which in each case comprise a housing section (26) and a work unit (72, 74), wherein
a) the housing sections (26) in each case
aa) are constructed the same on the connection side,
bb) can be releasably connected to each other at lateral end faces (28, 30),
cc) comprise an opening (58) essentially centrally between the end faces (28, 30),
dd) selectively mount one or two guide wheels (110) rotatably and
ee) comprise apertures in the region of the end faces (28, 30),
b) the work units (72, 74) in each case
ff) comprise a shaft (84, 106) at the base end of which a gear (86, 108) is provided non-rotatably,
gg) can be brought into engagement via the gear (86, 108) selectively with one of the guide wheels (110) and
hh) are held drivably in the opening (58) and
c) the guide wheels (110)
ii) are designed as part of a spur gear mechanism,
jj) are arranged in a row and driven and
kk) engage with each other through the apertures.

2. Implement according to claim 1, in which modules (14, 16) provided at the lateral ends of the implement hold rotatably one guide wheel (110), and modules (12) arranged therebetween hold rotatably two guide wheels (110).

3. Implement according to claim 1 or 2, in which the axes of rotation of the guide wheels (110) lie in one line and the axes of rotation of the gears (86) of the modules (12) located therebetween and of a module (14 or 16) located at one end lie in a line (L1) running parallel thereto.

4. Implement according to claim 3, in which an odd number of work units (72, 74) is provided, wherein the axis of rotation of a work unit (72, 74) situated at the end of the implement (10) is located between the two lines.

5. Implement according to one or more of the preceding claims, wherein the end faces (28, 30) extend in essentially plane fashion, in a longitudinal direction and vertically with a lateral distance from each other.

6. Implement according to one or more of the preceding claims, in which the housing sections (26) are connected to each other liquid-tightly by nut and bolt connections (32, 34) to form an overall housing.

7. Implement according to one or more of the preceding claims, in which beneath the modules (12, 14, 16) extends a slide plate (24) which can be connected thereto.

8. Implement according to one or more of the preceding claims, in which the housing sections (26) contain a shield (52) against obstacles or the like, formed from their front end region (54).

9. Implement according to claim 8, in which the front end region (54) comprises a shoulder (62) with which the slide plate (24) can be brought into abutment.

10. Implement according to one or more of the preceding claims, in which the housing sections (26) and if occasion arises the slide plate (24) can be connected to a reinforcing bar (22).

11. Implement according to claim 10, in which the reinforcing bar (22) has a rectangular cross-section and the housing sections (26) comprise rear, plane and upright walls (44) which can be connected to the reinforcing bar (22) by means of bolts (48, 50).

12. Implement according to one or more of the preceding claims, in which right and left end covers (18, 20) are flanged onto the end housing sections (26).

13. Implement according to one or more of the preceding claims, in which the shafts (84, 106) are mounted with bearing assemblies (82) eccentrically in bearing housings (76) which are held non-rotatably in the openings (58).

14. Implement according to one or more of the preceding claims, in which the housing sections (26) are of identical construction.

15. Disc mower with an implement constructed as a cutter bar according to one or more of the preceding claims.

16. Method of assembling the implement (10) according to any of claims 1-14 with several modules (12, 14, 16) and with a slide plate (24) which are mounted jointly on a reinforcing bar (22), characterised by the following steps:
a) the modules (12, 14, 16) are loosely connected to each other by means of nut and bolt connections (36, 38);
b) the modules (12, 14, 16) are loosely connected to the slide plate (24) by means of nut and bolt connections (70);
c) the unit consisting of modules (12, 14, 16) and slide plate (24) is positioned on the reinforcing bar (22);
d) the modules (12, 14, 16) and the slide plate (24) are preferably fixed by means of bolts (48, 50) to the reinforcing bar (22) and to each other by means of nut and bolt connections (32, 34, 70).

## Revendications

1. Outil de travail (10), notamment barre de coupe, comportant plusieurs modules (12,14,16), qui possèdent chacun une section de carter (26) et une unité de travail (72,74), et dans lequel
a) les sections de carter (26)
aa) sont respectivement réalisées de manière à être identiques côté raccordement,
bb) peuvent être reliées entre elles de façon amovible au niveau de surfaces d'extrémité latérales (28, 30),
cc) possèdent une ouverture (58) sensiblement au centre entre les surfaces d'extrémité (28,30),
dd) supportent au choix, avec possibilité de rotation, une ou plusieurs roues de renvoi (110), et
ee) possèdent des passages au voisinage des surfaces d'extrémité (28,30),
b) les unités de travail (72,74)
ff) possèdent un arbre (84,106), à l'extrémité de base duquel un pignon (86,108) est monté avec blocage en rotation,
gg) peuvent être amenées en prise au choix avec l'une des roues de renvoi (110) par l'intermédiaire du pignon (86,108), et
hh) sont logées, de manière à pouvoir être entraînées, dans l'ouverture (58), et
c) les roues de renvoi (110)
ii) sont réalisées sous la forme d'une partie d'un mécanisme de transmission à pignons doits,
jj) sont disposées et entraînées en série, et
kk) sont en prise réciproque au moyen des passages.

2. Outil de travail selon la revendication 1, dans lequel des modules (14,16) prévus sur les extrémités latérales de l'outil de travail reçoivent une roue de renvoi (110) de manière qu'elle puisse tourner et des modules (12) disposés entre les précédents reçoivent deux roues de renvoi (110) de manière qu'elles puissent tourner.

3. Outil de travail selon la revendication 1 ou 2, dans lequel les axes de rotation des roues de renvoi (110) sont disposés sur une droite et les axes de rotation des pignons (86) des modules intercalés (12) et d'un module (14 ou 16), situé à une extrémité, sont situés sur une droite (L1) parallèle à la précédente.

4. Outil de travail selon la revendication 3, dans lequel il est prévu un nombre impair d'unités de travail (72, 74), l'axe de rotation d'une unité de travail (72, 74) montée sur l'extrémité de l'outil de travail (10) étant situé entre les deux droites.

5. Outil de travail selon une ou plusieurs des revendications précédentes, dans lequel les surfaces d'extrémité (28,30) sont essentiellement planes, s étendent dans la direction longitudinale et sont verticales, en étant séparées par une distance latérale.

6. Outil de travail selon une ou plusieurs des revendications précédentes, dans lequel les sections de carter (26) sont reliées entre elles, d'une manière étanche aux liquides, pour la formation d'un boîtier global, par l'intermédiaire de liaisons à vis et écrou (32,34).

7. Outil de travail selon une ou plusieurs des revendications précédentes, dans lequel une plaque coulissante (24), qui peut être reliée aux modules (12, 14, 16), s'étend au-dessous de ces derniers.

8. Outil de travail selon une ou plusieurs des revendications précédentes, dans lequel les sections de carter (26) contiennent un système de protection (52), formé par leur partie d'extrémité avant (54), contre des obstacles ou analogues.

9. Outil de travail selon la revendication 8, dans lequel la partie d'extrémité avant (54) possède un épaulement (62), contre lequel la plaque coulissante (24) peut venir s'appliquer.

10. Outil de travail selon une ou plusieurs des revendications précédentes, dans lequel les sections de carter (26) et éventuellement la plaque coulissante (24) peuvent être raccordées à une barre de rigidification (22).

11. Outil de travail selon la revendication 10, dans lequel la barre de rigidification (22) possède une section transversale de forme rectangulaire, et les sections de carter (26) possèdent des parois arrière planes et verticales (44), qui peuvent être raccordées, au moyen de vis (48,50), aux barres de rigidification (22).

12. Outil de travail selon une ou plusieurs des revendications précédentes, dans lequel des couvercles de fermeture de droite et de gauche (18,20) sont raccordés par brides aux sections d'extrémité (26) du carter.

13. Outil de travail selon une ou plusieurs des revendications précédentes, dans lequel les arbres (84,106) sont tourillonnés, au moyen d'ensembles de paliers (82), d'une manière excentrée dans des logements de palier (76), qui sont logés avec blocage en rotation dans les ouvertures (58).

14. Outil de travail selon une ou plusieurs des revendications précédentes, dans lequel les sections de carter (26) sont identiques.

15. Faucheuse à disques comportant un outil de travail agencé sous la forme d'une barre de coupe, selon une ou plusieurs des revendications précédentes.

16. Procédé pour monter l'outil de travail (10) selon l'une des revendications 1-14, équipé de plusieurs modules (12,14,16) et d'une plaque coulissante (24), qui sont montés en commun sur une barre de rigidification (22), caractérisé par les étapes opératoires suivantes :
a) on relie entre eux de façon amovible les modules (12, 14, 16) au moyen de liaisons à vis et écrous (36, 38);
b) on relie les modules (12, 14, 16) de façon amovible à la plaque coulissante (24) au moyen de liaisons à vis et écrous (70);
c) on positionne l'unité constituée par les modules (12, 14, 16) et la plaque coulissante (24), sur la barre de rigidification (22);
d) on fixe les modules (12, 14, 16) et la plaque coulissante (24) de préférence au moyen de vis (48, 50) à la barre de rigidification (22) et entre eux au moyen de liaisons à vis et écrous (32, 34, 70).
